# EUROPÄISCHE PATENTANMELDUNG

(11) **EP 4 517 164 A1**
(43) Veröffentlichungstag der Anmeldung: **05.03.2025**
(21) Anmeldenummer: 23194681.5
(22) Anmeldetag: 31.08.2023
(51) Int. Cl.: F21S 41/63, F21S 41/153, G02B 26/08

(54) **VERFAHREN ZUR AUFLÖSUNGSOPTIMIERTEN ANSTEUERUNG EINES LEUCHTMODULS FÜR EINE KRAFTFAHRZEUGLEUCHTE**

(71) Anmelder: ZKW Group GmbH, 3250 Wieselburg (AT)
(72) Erfinder: Aigner, Clemens, 3100 St. Pölten (AT); Haas, Erik, 3203 Rabenstein an der Pielach (AT)
(74) Vertreter: Patentanwaltskanzlei Matschnig & Forsthuber OG

(57) **Zusammenfassung**

Verfahren zur auflösungsoptimierten Ansteuerung eines Leuchtmoduls (1) für eine Kraftfahrzeugleuchte (10), wobei das Leuchtmodul (1) zur Abstrahlung einer segmentierten Lichtverteilung mit einzeln ansteuerbaren Lichtsegmenten (51) eingerichtet ist, wobei das Leuchtmodul (1) eine Ablenkeinheit (4) umfasst, mit der eine native Auflösung des Leuchtmoduls (1) durch zumindest zeitweise Strahlablenkung mittels der Ablenkeinheit (4) visuell erhöht werden kann, wobei die Ansteuerung dergestalt erfolgt, dass in einem ersten Zeitbereich (T1) ein erstes niedrig aufgelösten Bild (A) durch das Leuchtmodul (1) abgestrahlt wird, wobei im ersten Zeitbereich (T1) das erste niedrig aufgelöste Bild (A) wiederkehrend mittels der Ablenkeinheit (4) derart abgelenkt wird, dass das erste niedrig aufgelöste Bild (A) im ersten Zeitbereich (T1) mit sich selbst zumindest teilweise visuell überlagert.

## Beschreibung

Die Erfindung betrifft ein Verfahren zur auflösungsoptimierten Ansteuerung eines Leuchtmoduls für eine Kraftfahrzeugleuchte, wobei das Leuchtmodul zur Abstrahlung einer segmentierten Lichtverteilung mit einzeln ansteuerbaren Lichtsegmenten eingerichtet ist, wobei das Leuchtmodul eine Ablenkeinheit umfasst, mit der eine native Auflösung des Leuchtmoduls durch zumindest zeitweise Strahlablenkung mittels der Ablenkeinheit visuell erhöht werden kann.

Aus dem Stand der Technik sind Verfahren zur Ansteuerung von Leuchtmodulen bekannt geworden, die eine zeitlich variable Veränderung der Lichtabstrahlung einzelner Segmente einer Lichtverteilung ermöglichen. Üblicherweise ist die Auflösung dabei durch die Auflösung des betreffenden Leuchtmoduls beschränkt. Um eine erhöhte visuelle Auflösung zu erreichen, sind Verfahren bekannt geworden, bei denen mit einer Ablenkeinheit eine native Auflösung des Leuchtmoduls durch zumindest zeitweise Strahlablenkung mittels der Ablenkeinheit visuell erhöht werden kann.

Die US 2020/0363707 zeigt eine optische Einrichtung. Die Veröffentlichung zeigt, dass bei einer visuellen Überlagerung zweier unterschiedlicher Bilder die Auflösung der optischen Einrichtung erhöht werden kann. Aus einem Eingangsbild werden zu diesem Zweck zwei unterschiedliche Bilder berechnet. Die zwei unterschiedlichen Bilder werden zeitlich hintereinander mit einem davon physisch getrennten Synchronisationssignal für die Ablenkeinheit ausgegeben. Die Synchronisation ist sichtlich sehr aufwendig und bindet Ressourcen.

Es ist daher eine Aufgabe der Erfindung, ein Verfahren zu liefern, mit dem die auflösungsoptimierte Ansteuerung eines Leuchtmoduls vereinfacht werden kann.

Diese Aufgabe wird mit einem Verfahren der eingangs genannten Art gelöst, wobei das Verfahren die folgenden Schritte umfasst:
a) Empfangen eines Sollbildes, wobei das Sollbild eine Auflösung aufweist, die die native Auflösung des Leuchtmoduls überschreitet;
b) Umwandeln des gemäß Schritt a) empfangenen Sollbildes in ein erstes niedrig aufgelöstes Bild anhand einer ersten Umwandlungsvorschrift, wobei dieses erste niedrig aufgelöste Bild dergestalt gewählt ist, dass dieses die native Auflösung des Leuchtmoduls aufweist, wobei das erste niedrig aufgelöste Bild zudem dergestalt gewählt ist, dass eine zumindest teilweise visuelle Überlagerung mit sich selbst einen zu dem Sollbild ähnlicheren Bildeindruck ergibt, als die Abbildung des ersten niedrig aufgelösten Bildes für sich genommen,
c) Ansteuerung des Leuchtmoduls, wobei die Ansteuerung dergestalt erfolgt, dass in einem ersten Zeitbereich das gemäß Schritt b) gewandelte erste niedrig aufgelösten Bild durch das Leuchtmodul abgestrahlt wird, wobei im ersten Zeitbereich das erste niedrig aufgelöste Bild wiederkehrend mittels der Ablenkeinheit derart abgelenkt wird, dass das erste niedrig aufgelöste Bild im ersten Zeitbereich mit sich selbst zumindest teilweise visuell überlagert.

Unter dem Ausdruck "Auflösung" ist die Summe der Lichtsegmente im jeweiligen Bild zu verstehen. Damit bezeichnet die "native Auflösung" jene Auflösung, die durch die Summe der einzeln ansteuerbaren Lichtsegmente zur Lichtabstrahlung gegeben ist. Sind z.B. die Lichtsegmente in zwei Zeilen und zwei Spalten angeordnet und einzeln ansteuerbar, so entspricht das einer nativen Auflösung von 2 x 2, wobei jedes einzeln ansteuerbare Lichtsegment auch als Leuchtpixel bezeichnet werden kann. Das Leuchtmodul weist vorzugsweise eine native Auflösung von zumindest 2 x 2 auf. Besonders bevorzugt handelt es sich um ein hochauflösendes Leuchtmodul für eine Kraftfahrzeugleuchte.

Im Rahmen der vorliegenden Patentanmeldung sei mit dem Begriff "Einheit" alleine oder auch in einer Komposition, wie in "Projektionseinheit", "Ablenkeinheit", "Modulsteuereinheit" oder "Speichereinheit" nicht zwingend ein einzelnes Element zu verstehen. Der Begriff kann auch mehrere Elemente, Baugruppen, Bausteine, Komponenten oder Kombinationen davon umfassen.

Durch die zumindest zeitweise bzw. wiederkehrende Strahlablenkung mittels der Ablenkeinheit ist es möglich, die durch das menschliche Auge wahrgenommene Auflösung gegenüber der nativen Auflösung zu erhöhen. Die aus der zumindest zeitweisen Strahlablenkung resultierende visuelle Überlagerung meint also eine Überlagerung, welche sich durch die Trägheit des menschlichen Auges ergibt.

Mit wiederkehrender Ablenkung ist eine Ablenkung gemeint, die für die Dauer des ersten Zeitbereichs die beschriebene visuelle Überlagerung des ersten niedrig aufgelösten Bildes mit sich selbst bewirkt. Das Ausmaß der Überlagerung des ersten niedrig aufgelösten Bildes mit sich selbst kann anhand zumindest eines Ablenkungsparameters beschrieben werden.

Das Sollbild kann eine Soll-Lichtverteilung aufweisen.

Hinsichtlich der Frage der Ähnlichkeit von Bildern sind der Fachperson geeignete Algorithmen zur Beurteilung bekannt. Es kann dabei z.B. die gemeinsame Information (siehe z.B. Schlagwort "Mutual Information") oder die strukturelle Ähnlichkeit (siehe z.B. Schlagwort SSIM - structural similarity index measure) herangezogen werden. Zu diesen Begriffen gibt es beispielsweise online umfangreiche Informationen, auch in der online-Enzyklopädie "Wikipedia").

Insbesondere kann vorgesehen sein, dass die Ablenkeinheit dazu eingerichtet ist, das erste niedrig aufgelöste Bild wiederkehrend im ersten Zeitbereich mit einer Frequenz von zumindest 30Hz, typischerweise zwischen 30Hz und 160Hz abzulenken.

Weiters kann vorgesehen sein, dass das Leuchtmodul einzeln ansteuerbaren Lichtsegmente aufweist, wobei die Segmentierung der Lichtverteilung durch die einzeln ansteuerbaren Lichtsegmente realisiert ist, die in einer Matrix mit einer Auflösung von zumindest zwei Zeilen und zwei Spalten weitgehend lückenlos nebeneinander angeordnet sind.

Gegebenenfalls kann vorgesehen sein, dass eine maximale durchgeführte Ablenkung durch die Ablenkeinheit so konzipiert ist, dass im Vergleich zu einem nicht abgelenkten Referenzzustand der abgelenkte Zustand einen vertikalen sowie einen horizontalen Versatz um im Wesentlichen eine halbe Lichtsegmentbreite aufweist, sodass bei Vorliegen der maximalen Amplitude der Ablenkung - abgesehen von Randlichtsegmenten - jedes abgelenkte Lichtsegment im Wesentlichen mit vier nichtabgelenkten Lichtsegmenten visuell überlagert.

Im Wesentlichen überlagern die Lichtsegmente - abgesehen von Randlichtsegmenten - bei einer wiederkehrenden Ablenkung visuell räumlich zu je 25%. Die wahrgenommene Auflösung kann dadurch annähernd das Vierfache der nativen Auflösung betragen. Unter einem Randlichtsegment wird ein Lichtsegment verstanden, das nicht allseitig von weiteren Lichtsegmenten umschlossen ist, sondern zumindest an einer Seite frei von benachbarten Lichtsegmenten ist. Es stellt damit einen Randbereich des abzustrahlenden Bildes dar.

Das Ausmaß der Überlagerung kann jedenfalls anhand des zumindest einen Ablenkungsparameters beschrieben werden.

Insbesondere kann vorgesehen sein, dass die Ablenkeinheit eine neutrale Stellung aufweist. Diese Stellung kann, muss sich aber nicht, von einer Nullposition unterscheiden. In dieser neutralen Stellung bewirkt die Ablenkeinheit keine wiederkehrende Ablenkung des passierenden Lichtes. Für den Fall, dass die Ablenkeinheit nicht benötigt wird oder abgeschaltet werden muss, wird eine Abstrahlung eines niedrig aufgelösten Bildes weiterhin gewährleistet.

Es kann vorgesehen sein, dass die erste Umwandlungsvorschrift eine zumindest näherungsweise Lösung eines linearen Gleichungssystems umfasst, welches lineare Gleichungssystem eine Menge von linearen Gleichungen beinhaltet, in denen Informationen des Sollbildes mit Bezug zum ersten niedrig aufgelösten Bild in der zumindest teilweisen Überlagerung mit sich selbst enthalten sind.

Diese bevorzugte Ausgestaltung der ersten Umwandlungsvorschrift als eine zumindest näherungsweisen Lösung umfasst bevorzugt eine iterative Lösung eines linearen Gleichungssystems.

Die linearen Gleichungen können einen Zusammenhang eines jeden Teils des Sollbildes mit jedem Teil des ersten niedrig aufgelösten Bildes in der zumindest teilweisen Überlagerung mit sich selbst beschreiben.

Die genannten Informationen des Sollbildes mit Bezug zum ersten niedrig aufgelösten Bild in der zumindest teilweisen Überlagerung mit sich selbst können weiters den zumindest einen Ablenkungsparameter beinhalten.

Aus Effizienzgründen kann vorgesehen sein, dass die erste Umwandlungsvorschrift von einer externen Recheneinheit ausgeführt wird, wobei vorzugsweise das erste niedrig aufgelöste Bild in einer Speichereinheit des Leuchtmoduls abrufbar abgespeichert wird. Weiters kann mit Vorteil vorgesehen sein, dass in Schritt b) das gemäß Schritt a) empfangene Sollbild anhand einer zweiten Umwandlungsvorschrift zusätzlich in ein zweites niedrig aufgelöstes Bild gewandelt wird, wobei das zweite niedrig aufgelöste Bild dergestalt gewählt ist, dass dieses die native Auflösung des Leuchtmoduls aufweist, wobei das zweite niedrig aufgelöste Bild zudem dergestalt gewählt ist, dass es für sich genommen einen ähnlicheren Bildeindruck zu dem Sollbild aufweist als das erste niedrig aufgelöste Bild, wobei in Schritt c) in einem zweiten Zeitbereich das zweite niedrig aufgelöste Bild durch das Leuchtmodul abgestrahlt wird, wobei im zweiten Zeitbereich das zweite niedrig aufgelöste Bild nicht wiederkehrend mittels der Ablenkeinheit abgelenkt ist.

Die Ablenkeinheit kann sich also im zweiten Zeitbereich in der neutralen Stellung befinden.

Die zweite Umwandlungsvorschrift umfasst dabei bevorzugterweise eine Skalierungsmethode, bei der das zweite niedrig aufgelöste Bild gänzlich aus Informationen des Sollbildes gewandelt wird. Diese Skalierungsmethode kann eine Reduktion der Auflösung des Sollbildes auf die native Auflösung des Leuchtmoduls beinhalten. Dabei kann es sich z.B. um eine "Downsampling" Methode handeln. Weiters kann es sich dabei z.B. um eine Blockverarbeitungsmethode handeln, bei der beispielsweise aus der blockweisen Mittelwertbildung des Sollbildes die Werte aller Lichtsegmente des zweiten niedrig aufgelösten Bildes berechnet werden.

Es kann vorgesehen sein, dass die Dauer und/oder der Startzeitpunkt des ersten Zeitbereichs sowie die Dauer und/ oder der Startzeitpunkt des zweiten Zeitbereichs durch zumindest einen Steuerparameter bestimmt wird, wobei der zumindest eine Steuerparameter Informationen zu zumindest einem der folgenden Kriterien enthält: Solllichtfunktion, Umgebungstemperatur, Umgebungshelligkeit, Leuchtmodulzustand, Fahrzeuggeschwindigkeit.

Aus Effizienzgründen kann vorgesehen sein, dass die zweite Umwandlungsvorschrift von einer externen Recheneinheit ausgeführt wird.

Insbesondere kann vorgesehen sein, dass das gemäß Schritt b) gewandelte erste niedrig aufgelöste Bild und das gemäß Schritt b) gewandelte zweite niedrig aufgelöste Bild zeitlich vor Schritt c) in einem Teilschritt b1) abrufbar in einer Speichereinheit abgespeichert werden.

Diese Speichereinheit kann bevorzugt vom Leuchtmodul umfasst sein.

Weiters kann vorgesehen sein, dass das Sollbild zumindest einen stetigen Hell-Dunkel Verlauf aufweist, bevorzugt weist das Sollbild mehrere stetige Hell-Dunkel Verläufe auf, welche zusammen ein Symbol formen.

Weiters betrifft die Erfindung ein Leuchtmodul für eine Kraftfahrzeugleuchte, wobei das Leuchtmodul zur Abstrahlung einer segmentierten Lichtverteilung eingerichtet ist, wobei das Leuchtmodul eine Ablenkeinheit umfasst, mit der eine visuell wahrnehmbare Auflösung der vom Leuchtmodul erzeugten Lichtverteilung gegenüber der nativen Auflösung des Leuchtmoduls erhöht werden kann, wobei das Leuchtmodul dazu eingerichtet ist, zumindest gemäß Schritt c) des genannten Verfahrens angesteuert zu werden.

Es kann dabei vorgesehen sein, dass das Leuchtmodul weiters eine Speichereinheit sowie eine Modulsteuereinheit umfasst, wobei die Speichereinheit dazu eingerichtet ist, zumindest ein erstes niedrig aufgelöstes Bild und zumindest ein zweites niedrig aufgelöstes Bild zu speichern,
wobei die Modulsteuereinheit dazu eingerichtet ist, das erste niedrig aufgelöste Bild sowie das zweite niedrig aufgelöste Bild von der Speichereinheit abzurufen und ein Lichtsteuersignal an die Lichtquelle abzugeben, sodass entweder das erste niedrig aufgelöste Bild oder das zweite niedrig aufgelöste Bild von dem Leuchtmodul abgestrahlt wird,
wobei die Modulsteuereinheit weiters dazu eingerichtet ist die Ablenkeinheit derart anzusteuern, dass diese bei der Abstrahlung des ersten niedrig aufgelösten Bildes durch das Leuchtmodul das erste niedrig aufgelöste Bild wiederkehrend ablenkt, wobei die Modulsteuereinheit weiters dazu eingerichtet ist, die Ablenkeinheit derart anzusteuern, dass diese bei der Abstrahlung des zweiten niedrig aufgelösten Bildes durch das Leuchtmodul das zweite niedrig aufgelöste Bild nicht wiederkehrend ablenkt.

Weiters betrifft die Erfindung ein Kraftfahrzeug mit einem solchen Leuchtmodul, wobei das das Kraftfahrzeug und/oder das Leuchtmodul zur zumindest teilweisen Ausführung des genannten Verfahrens eingerichtet ist.

Sämtliche im Verfahren genannten Vorrichtungsmerkmale können, sofern nicht anders angegeben, auch Teil des Leuchtmoduls für eine Kraftfahrzeugleuchte bilden. Auch können in umgekehrter Weise sämtliche in Zusammenhang mit dem Leuchtmodul genannten Vorrichtungsmerkmale Teil des zuvor beschriebenen Verfahrens bilden. Das Leuchtmodul kann sowohl eine Signalleuchte als auch ein Leuchtmodul in einem Kraftfahrzeugscheinwerfer betreffen. Das Leuchtmodul ist vorzugsweise für den Einsatz in einer Kraftfahrzeugleuchte, insbesondere in einer Signallichtleuchte oder in einem Kraftfahrzeugscheinwerfer konzipiert. Demnach kann das Leuchtmodul auch Teil der genannten Vorrichtungen sein.

Die Erfindung ist im Folgenden anhand beispielhafter und nicht einschränkender Ausführungsformen näher erläutert, die in den Figuren veranschaulicht sind. Darin zeigt
Fig. 1 eine schematische Darstellung eines Leuchtmoduls,
Fig. 2a eine schematische Darstellung eines niedrig aufgelöstes Bildes,
Fig. 2b eine schematische Darstellung der Überlagerung zweier niedrig aufgelöster Bilder,
Fig. 3 ein erstes Flussdiagramm gemäß des beschriebenen Verfahrens,
Fig. 4a ein zweites Flussdiagramm gemäß einer weiteren Ausbildung des Verfahrens,
Fig. 4b ein drittes Flussdiagramm gemäß der weiteren Ausbildung des Verfahrens,
Fig. 4c ein Zeitdiagramm gemäß der weiteren Ausbildung des Verfahrens,
Fig. 5 einen Vergleich von Sollbild, erstem niedrig aufgelösten Bild, erstem niedrig aufgelösten Bild in der zumindest teilweisen Überlagerung mit sich selbst und zweitem niedrig aufgelösten Bild und
Fig. 6 ein Kraftfahrzeug mit einem solchen Leuchtmodul.

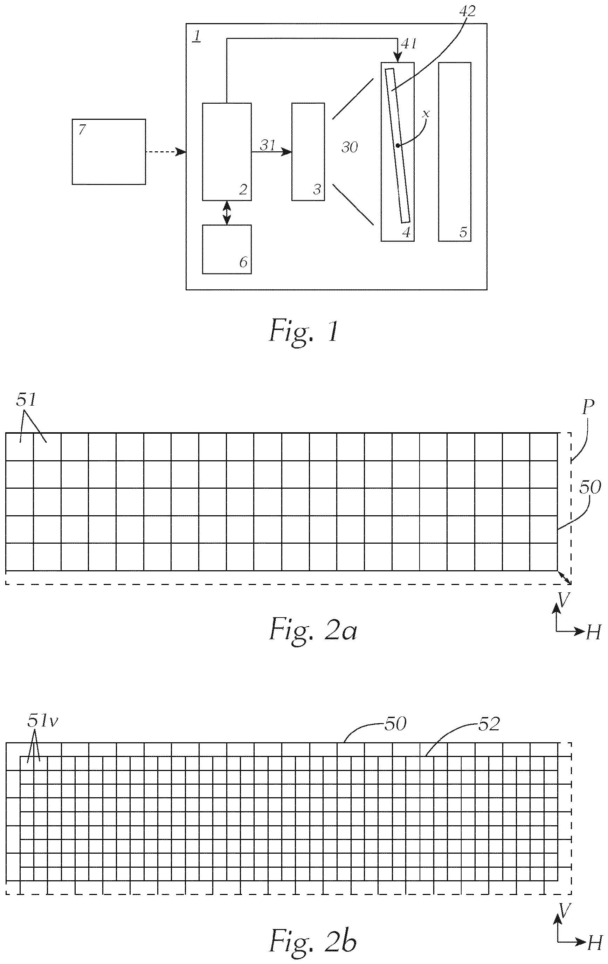

Fig. 1 zeigt eine schematische Darstellung eines Leuchtmoduls 1 für eine Kraftfahrzeugleuchte 10. Das Leuchtmodul 1 ist zur Abstrahlung einer segmentierten Lichtverteilung mit einzeln ansteuerbaren Lichtsegmenten eingerichtet. Das Leuchtmodul 1 umfasst eine Modulsteuereinheit 2, eine Speichereinheit 6, eine Lichtquelle 3, eine Ablenkeinheit 4 und eine

Projektionseinheit 5. Die Speichereinheit 6 beinhaltet bevorzugt einen elektronischen Speicher. Weiters zeigt Fig. 1 eine externe Recheneinheit 7.

Es sind bereits verschiedenste Techniken bekannt geworden, um eine segmentierte Lichtverteilung zu generieren. Dazu gehört insbesondere die flächenbasierte Modulation mittels LEDs (Licht emittierende Dioden) angeordnet in einer Matrix, die flächenbasierte Modulation von Licht mittels eines LCD (Liquid Crystal Display), oder die flächenbasierte Modulation von Licht mittels DLP (Digital Light Processing) bzw. DMD (Digital Mirror Device). Alternativ dazu sind auch Lichtstrahl-Modulationstechniken bekannt geworden, also scannende Systeme, die Lichtstrahlen oder Lichtbündel mit einer für das menschliche Auge nicht wahrnehmbaren Frequenz auf einen Bereich scannen, sodass frei variierbare Lichtverteilungen entstehen. Die heute bekannten hochauflösenden Leuchtmodule erlauben bereits Auflösungen mit mehreren 1000 individuell schaltbaren und dimmbaren Lichtsegmenten, bevorzugt sind diese in einem Seitenverhältnis von 1:4 angeordnet, wobei sich die größere Ausdehnung in der Horizontalen erstreckt.

Die Begriffe Horizontal und Vertikal können sich dabei auf die vorgesehene Einbauposition des Leuchtmoduls 1 beziehen, wobei lediglich wesentlich ist, dass mit Horizontal und Vertikal zueinander orthogonale Orientierungen bezeichnet werden.

Die in Fig. 1 gezeigte Lichtquelle 3 kann mehrere Elemente umfassen. Beispielsweise umfasst die Lichtquelle 3 ein lichtemittierendes Element und einen nachgeordneten Flächenmodulator (nicht gezeigt), wie beispielsweise einen LCD, DMD bzw. DLP. Bevorzugt umfasst die Lichtquelle 3 ein Array mit mindestens zwei LEDs, wobei jede LED individuell steuerbar ist. Besonders bevorzugt umfasst die Lichtquelle 3 ein Array mit mehr als 1000 individuell steuerbaren LEDs, welche in einem Array mit einem Seitenverhältnis 1:4 angeordnet sind. Weiters kann die Lichtquelle 3 alternativ eine Kombination aus einem lichtemittierenden Element, einem Kollimator und einem Lichtstrahlmodulator umfassen, welcher in scannender Form kollimiertes Licht des lichtemittierenden Elements mit einer für das menschliche Auge nicht wahrnehmbaren Frequenz auf einen Bereich scannt. In diesem Bereich kann ein Lichtkonversionselement angeordnet sein. Die Lichtquelle 3 kann daher aus mehreren Elementen bestehen. Beispielsweise können zusätzliche Elemente wie optische Linsen oder Reflektoren vorgesehen sein, welche der Übersicht halber aber nicht gezeigt sind. Wesentlich ist, dass von der Lichtquelle 3 ein Lichtbündel 30 ausgeht, welches in zumindest einer Ebene senkrecht zur Lichtausbreitungsrichtung des Lichtbündels 30 mindestens zwei Lichtsegmente aufweist, welche zueinander unterschiedliche Lichtintensitäten aufweisen können. Dieses Lichtbündel 30 entspricht somit zumindest teilweise in zumindest einer Ebene senkrecht zur Lichtausbreitungsrichtung des Lichtbündels 30 einem niedrig aufgelösten Bild A,B.

Zu diesem Zweck kann die Lichtquelle 3 ein Lichtsteuersignal 31 empfangen und in Abhängigkeit von dem Lichtsteuersignal 31 ein Lichtbündel 30 abstrahlen. Das Lichtsteuersignal 31 kann zu diesem Zweck zumindest teilweise repräsentativ für das von der Lichtquelle 3 ausgehende Lichtbündel 30 sein. Die Modulsteuereinheit 2 kann dazu eingerichtet sein, das Lichtsteuersignal 31 abzugeben.

Das Lichtsteuersignal 31 kann zumindest als Teil eines Bildsignals ausgestaltet sein, in welchem das niedrig aufgelöste Bild enthalten ist.

Das von der Lichtquelle 3 ausgehende Lichtbündel 30 wird von der Projektionseinheit 5 innerhalb eines Projektionswinkelbereiches P vor das Leuchtmodul 1 projiziert. Damit wird eine bestimmte Lichtverteilung bzw. ein bestimmtes niedrig aufgelöstes Bild durch das Leuchtmodul 1 abgestrahlt. Dementsprechend ergibt sich eine Projektion 50 eines bestimmten niedrig aufgelösten Bildes innerhalb eines Projektionswinkelbereiches P vor dem Leuchtmodul 1. Eine solche Projektionseinheit 5 umfasst üblicherweise mehrere optische Elemente, insbesondere Linsen. Der Übersicht halber sind diese mehreren optischen Elemente nicht gezeigt.

Der Projektionswinkelbereich P wird durch die Apertur der Projektionseinheit 5 bestimmt. Also entspricht der Projektionswinkelbereich P dem maximal möglichen Abstrahlkegel der Projektionseinheit 5. Ein solcher Abstrahlkegel bezieht sich auf einen Kegel im mathematischen Sinne, wobei auch alle Untervarianten davon mitumfasst sein können. Untervarianten sind beispielsweise Pyramidenkegel oder Kegelstümpfe.

Wie in Fig. 2a gezeigt, umfasst die Projektion 50 eines niedrig aufgelösten Bildes beispielsweise ein Array an Lichtsegmenten 51 mit fünf Reihen und zwanzig Spalten. Damit umfasst die gezeigte native Auflösung des Leuchtmoduls 120 x 5 Lichtsegmente 51. Wenngleich lediglich hundert Lichtsegmente 51 gezeigt sind, kann die Lichtquelle 3 derart ausgestaltet sein, dass innerhalb des Projektionswinkelbereiches P mehrere tausend Lichtsegmente 51 projiziert bzw. durch das Leuchtmodul 1 abgestrahlt werden.

Die in Fig. 1 gezeigte Ablenkeinheit 4 kann nun das von der Lichtquelle 3 abgestrahlte Lichtbündel 30 und damit auch die Projektion 50 zeitweise ablenken. Damit kann die native Auflösung des Leuchtmoduls 1 durch zumindest zeitweise Strahlablenkung mittels der Ablenkeinheit 4 visuell erhöht werden.

Bevorzugt ist die Ablenkeinheit 4 im Strahlengang des Lichtbündels 30 zwischen der Lichtquelle 3 und zumindest einem Teil der Projektionseinheit 5 angeordnet. Mit zumindest einem Teil der Projektionseinheit 5 sei gemeint, dass diese wie oben erläutert aus mehreren optischen Elementen bestehen kann, zwischen welchen die Ablenkeinheit 4 angeordnet sein kann.

Die Ablenkeinheit 4 kann ein Ablenksteuersignal 41 empfangen und das von der Lichtquelle 3 abgestrahlte Lichtbündel 30 in Abhängigkeit von dem Ablenksteuersignal 41 ablenken. Damit kann die Projektion 50 eines niedrig aufgelösten Bildes in Abhängigkeit von dem Ablenksteuersignal 41 zeitweise innerhalb des Projektionswinkelbereiches P abgelenkt werden. Die Modulsteuereinheit 2 kann dazu eingerichtet sein das Ablenksteuersignal 41 abzugeben.

Die Ablenkeinheit 4 kann ein Glasplättchen 42 umfassen, welches aus einem Material besteht, das transparent für das abgestrahlte Lichtbündel 30 der Lichtquelle 3 ist. Dieses Glasplättchen 42 kann als planparallele Platte ausgeführt sein und durch eine entsprechende mechanische Aufhängung um zumindest eine Schwenkachse x schwenkbar gelagert sein, wobei diese Schwenkachse x bevorzugt senkrecht zur Lichtausbreitungsrichtung des von der Lichtquelle 3 abgestrahlten Lichtbündels 30 steht. Beispielsweise kann die Ablenkeinheit 4 weiters einen elektromagnetischen Aktuator (nicht gezeigt) aufweisen, welcher das Glasplättchen 42 abhängig vom Ablenksteuersignal 41 um die zumindest eine Schwenkachse x zeitweise schwenkt. Durch die Schwenkung kann der Eintrittswinkel des Lichtbündels 30 in das Glasplättchen zeitweise geändert werden, womit entsprechend der Lichtbrechung das Lichtbündel 30 beim Lichtdurchtritt durch das Glasplättchen 42 parallel zur Lichtausbreitungsrichtung des Lichtbündels 30 abgelenkt werden kann. Dadurch kann die Projektion 50 des von der Lichtquelle abgestrahlten Lichtbündels 30 bzw. eines niedrig aufgelösten Bildes vor das Leuchtmodul 1 abgelenkt werden. Dieser Umstand wird anhand Fig. 2b näher erläutert.

Dem Fachmann sind verschiedenste Möglichkeiten bekannt, um eine derartige Ablenkeinheit 4 zu schaffen. Beispielsweise sind auch Prismen (nicht gezeigt) denkbar, welche durch eine laterale Positionsänderung (bezogen auf die Lichtausbreitungsrichtung des Lichtbündels 30) und damit ebenfalls durch Brechung die Projektion 50 des Lichtbündels 30 bzw. des niedrig aufgelösten Bildes innerhalb des Projektionswinkelbereiches P ablenken können. Möglich sind auch reflektive Lösungen einer Ablenkeinheit 4.

Durch die zumindest zeitweise Ablenkung der Projektion 50 eines niedrig aufgelösten Bildes innerhalb des Projektionswinkelbereiches P wird, wie in Fig. 2b gezeigt, der beleuchtbare Winkelbereich erweitert. Insbesondere kann mit einer ausreichend schnellen und wiederkehrenden Ablenkung bzw. mit einer ausreichend hohen Ablenkfrequenz von mindestens 30 Hz, bevorzugt zwischen 30Hz und 160Hz eine abgelenkte Projektion 52 und eine nicht abgelenkte Projektion 50 visuell überlagert werden. Dadurch können visuelle Lichtsegmente 51v gebildet werden, durch welche die Auflösung des Leuchtmoduls 1 visuell erhöht wird. Es wird der Einfachheit halber von einer Überlagerung gesprochen, wenngleich klar ist, dass sich die Überlagerung durch die Trägheit des menschlichen Auges ergibt.

Eine zumindest zeitweise Ablenkung der Projektion 50 innerhalb des Projektionswinkelbereiches P meint also die Verschiebung der Projektion 50 im möglichen Abstrahlkegel, also im Winkelraum, der sich durch die Projektionseinheit 5 ergibt. Der Projektionswinkelbereich P besitzt bevorzugt eine horizontale und eine vertikale Ausdehnung, wobei die horizontale Ausdehnung größer als die vertikale Ausdehnung sein kann. Beispielsweise deckt die horizontale Ausdehnung einen Winkelbereich von maximal 50° und die vertikale Ausdehnung einen Winkelbereich von maximal 20° ab.

Im Sinne dieser Beschreibung zeigen die nicht abgelenkte Projektion 50 und die abgelenkte Projektion 52 jeweils die Projektion des selben niedrig aufgelösten Bildes. Eine visuelle Überlagerung des niedrig aufgelösten Bildes mit sich selbst resultiert also aus der visuellen Überlagerung einer abgelenkten Projektion 50 und einer nicht abgelenkten Projektion 52 desselben niedrig aufgelösten Bildes. Das Ausmaß der Überlagerung des niedrig aufgelösten Bildes mit sich selbst kann anhand zumindest eines Ablenkungsparameters beschrieben werden.

Die maximale Ablenkung durch die Ablenkeinheit 4 ist im vorliegenden Fall so konzipiert, dass im Vergleich zur nicht abgelenkte Projektion 50 die abgelenkte Projektion 52 einen vertikalen sowie einen horizontaler Versatz um im Wesentlichen eine halbe Lichtsegmentbreite aufweist. Somit überlagert jedes Lichtsegment 51 - abgesehen von Randlichtsegmenten - bei der hier gezeigten maximalen Ablenkung mit vier nichtabgelenkten Lichtsegmenten 51 desselben niedrig aufgelösten Bildes. Die wahrgenommene Auflösung kann dadurch annähernd das Vierfache der nativen Auflösung betragen.

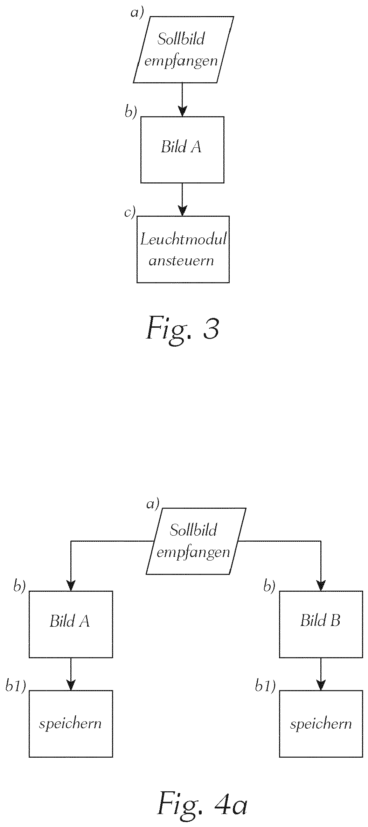

Fig. 3 zeigt ein erstes Flussdiagramm. In diesem ersten Flussdiagramm wird in einem ersten Schritt a) ein Sollbild S empfangen. Dieses Sollbild S weist eine Auflösung auf, die die native Auflösung des Leuchtmoduls 1 überschreitet. Das Sollbild S kann in einem Bildsignal enthalten sein. Das Sollbild S kann auch einen Teil eines größeren Bildes bilden, welches größere Bild eine höhere Auflösung als das Sollbild S aufweist. Damit ist gemeint, dass das Sollbild S einen Abschnitt eines größeren Bildes bilden kann.

Im Folgeschritt b) wird das gemäß Schritt a) empfangene Sollbild S gemäß einer ersten Umwandlungsvorschrift in ein erstes niedrig aufgelöstes Bild A gewandelt. Dieses erste niedrig aufgelöste Bild A ist dergestalt gewählt, dass dieses die native Auflösung des Leuchtmoduls 1 aufweist. Weiters ist das erste niedrig aufgelöste Bild A dergestalt gewählt, dass eine zumindest teilweise visuelle Überlagerung mit sich selbst einen zu dem Sollbild S ähnlicheren Bildeindruck ergibt, als die Abbildung des ersten niedrig aufgelösten Bildes A für sich genommen.

Die erste Umwandlungsvorschrift kann von der Modulsteuereinheit 2 ausgeführt werden. Demnach kann die Modulsteuereinheit 2 dazu eingerichtet sein die erste Umwandlungsvorschrift auszuführen. Bevorzugt wird die erste Umwandlungsvorschrift aber von einer externen Recheneinheit 7 ausgeführt. Die externe Recheneinheit 7 kann also dazu eingerichtet sein, das Sollbild S gemäß Schritt a) zu empfangen. Weiters kann die externe Recheneinheit 7 dazu eingerichtet die erste Umwandlungsvorschrift gemäß Schritt b) auszuführen. Die externe Recheneinheit 7 ist dabei bevorzugt kein Teil des Leuchtmoduls 1. Es kann vorgesehen sein, dass das erste niedrig aufgelöste Bild A in der Speichereinheit 6 des Leuchtmoduls 1 abrufbar abgespeichert wird. Wird die erste Umwandlungsvorschrift von der externen Recheneinheit 7 ausgeführt, so kann diese externe Recheneinheit 7 dazu eingerichtet sein, das erste niedrig aufgelöste Bild A in der Speichereinheit 6 des Leuchtmoduls 1 abrufbar abzuspeichern. Dabei kann die Modulsteuereinheit 2 zum Abrufen des in der Speichereinheit 6 abgespeicherten ersten niedrig aufgelöstes Bildes A eingerichtet sein.

Die erste Umwandlungsvorschrift umfasst bevorzugt eine zumindest näherungsweise Lösung eines linearen Gleichungssystems. Dieses Gleichungssystem umfasst eine Menge von linearen Gleichungen und kann in der Form Sv = Km·Av angeschrieben werden. "Km·Av" entspricht einer Matrix-Vektor-Multiplikation. Sv bezeichnet einen Vektor mit einer Anzahl an Solllichtintensitätswerten, welche Anzahl an Solllichtintensitätswerten der Auflösung des Sollbildes S entspricht. Bei einer Sollbild-Auflösung von 40 x 10 umfasst der Vektor Sv also vierhundert Komponenten. Damit umfasst das lineare Gleichungssystem im vorliegenden Fall vierhundert Gleichungen. Av bezeichnet ebenso einen Vektor mit einer Anzahl an gesuchten Lichtintensitätswerten, welche Anzahl an gesuchten Lichtintensitätswerten der Auflösung des ersten niedrig aufgelösten Bildes A entspricht. Damit umfasst die näherungsweise Lösung des linearen Gleichungssystem im vorliegenden Fall einhundert gesuchte Lichtintensitätswerte. Durch die teilweise Überlagerung des ersten niedrig aufgelösten Bildes A mit sich selbst, ergibt sich ein Zusammenhang zwischen den gesuchten Lichtintensitätswerten und den Solllichtintensitätswerten. Dieser Zusammenhang wird anhand einer Konnexmatrix Km beschrieben. Damit beschreibt die Konnexmatrix Km die Auswirkung eines jeden Lichtsegments 51 in der teilweisen visuellen Überlagerung mit den benachbarten Lichtsegmenten 51 auf jeden einzelnen Solllichtintensitätswert.. Demnach entspricht die Konnexmatrix Km einer Matrix mit vierhundert mal einhundert Elementen.

Die Menge der linearen Gleichungen, also die Anzahl derer hängt damit von der Auflösung des Sollbildes S und der Auflösung des ersten niedrig aufgelösten Bildes A bzw. der nativen Auflösung des Leuchtmoduls 1 ab.

Der Vektor Sv mit der Anzahl an Sollichtintensitätswerten, sowie die Konnexmatrix Km können gemeinsam als "Informationen des Sollbildes S mit Bezug zum ersten niedrig aufgelösten Bild A in der zumindest teilweisen Überlagerung mit sich selbst" bezeichnet werden.

Die Konnexmatrix Km kann berechnet oder gemessen werden.

Wird die Konnexmatrix Km berechnet, so weisen die genannten Informationen des Sollbildes S weiters den zumindest einen Ablenkungsparameter auf. Im vorliegenden Beispiel sind zwei Ablenkungsparameter vorgesehen, welche den vertikalen sowie den horizontalen Versatz um im Wesentlichen eine halbe Lichtsegmentbreite beschreiben.

Bei der Messung der Konnexmatrix Km kann beispielsweise jedes Lichtsegment 51 einzeln aktiviert werden, um die Auswirkungen jedes einzelnen Lichtsegments 51 in der wiederkehrend abgelenkten Form auf alle oder zumindest einen Teil der entsprechenden Sollichtintensitätswerte zu erfassen.

Eine Ausgestaltung der ersten Umwandlungsvorschrift als eine zumindest näherungsweise Lösung des linearen Gleichungssystems kann entsprechende Methoden zur Ausgleichung und/oder Regularisierung umfassen. Die bevorzugte Ausgestaltung der ersten Umwandlungsvorschrift als eine zumindest näherungsweisen Lösung umfasst bevorzugt eine iterative Lösung eines linearen Gleichungssystems.

In einem weiteren Schritt c) wird das Leuchtmodul 1 angesteuert. Die Ansteuerung erfolgt dergestalt, dass in einem ersten Zeitbereich T1 das gemäß Schritt b) gewandelte erste niedrig aufgelöste Bild A durch das Leuchtmodul 1 abgestrahlt wird. Die Modulsteuereinheit 2 kann ein entsprechendes Lichtsteuersignal 31 an die Lichtquelle 3 abgeben, sodass ein entsprechendes Lichtbündel 30 von der Lichtquelle 3 abgestrahlt wird. Dieses Lichtbündel 30 wird wie beschrieben von der Projektionseinheit 5 vor das Leuchtmodul 1 in Form einer Projektion 50 abgestrahlt. Diese Projektion 50 entspricht in diesem Zusammenhang dem ersten niedrig aufgelösten Bild A. Bevorzugt wird das erste niedrig aufgelöste Bild A durchgehend im ersten Zeitbereich T1 vom Leuchtmodul 1 abgestrahlt.

Ist das erste niedrig aufgelöste Bild A in einer Speichereinheit 6 des Leuchtmoduls 1 abrufbar gespeichert, so kann die Modulsteuereinheit 2 dazu eingerichtet sein, das erste niedrig aufgelöste Bild A von der Speichereinheit 6 abzurufen und ein darauf basierendes Lichtsteuersignal 31 abzugeben.

Weiters wird im ersten Zeitbereich T1 das erste niedrig aufgelösten Bild A wiederkehrend mittels der Ablenkeinheit 4 abgelenkt, so dass das erste niedrig aufgelöste Bild A im ersten Zeitbereich T1 mit sich selbst zumindest teilweise visuell überlagert. Die Modulsteuereinheit 2 kann ein entsprechendes Ablenksteuersignal 41 an die Ablenkeinheit 4 abgeben, sodass das erste niedrig aufgelöste Bild A bzw. dessen Projektion 50 wiederkehrend abgelenkt wird. Das Ablenksteuersignal 41 kann zu diesem Zweck auch wiederkehrend an die Ablenkeinheit 4 abgegeben werden. Bevorzugt ist die wiederkehrende Ablenkung des ersten niedrig aufgelösten Bildes A durchgehend im ersten Zeitbereich T1 aktiv.

Die Abgabe des Lichtsteuersignals 31 zur Abstrahlung des ersten niedrig aufgelösten Bildes A und/oder die Abgabe des Ablenksteuersignals 41 zur Aktivierung der wiederkehrenden Ablenkung durch die Ablenkeinheit 4 kann den ersten Zeitbereich T1 starten. Die Abgabe eines Lichtsteuersignals 31 zur Abstrahlung eines zum ersten niedrig aufgelösten Bild A unterschiedlichen niedrig aufgelösten Bildes und/oder die Abgabe eines Ablenksteuersignals 41 zur Deaktivierung der wiederkehrenden Ablenkung durch die Ablenkeinheit kann den ersten Zeitbereich T1 beenden.

Fig. 4a zeigt ein zweites Flussdiagramm. In diesem zweiten Flussdiagramm wird eine weitere Ausbildung des Verfahrens gezeigt, wobei wiederum in einem ersten Schritt a) ein Sollbild S empfangen wird. Dieses Sollbild S weist eine Auflösung auf, die die native Auflösung des Leuchtmoduls 1 überschreitet. Im Folgeschritt b) wird das gemäß Schritt a) empfangene Sollbild S entsprechend einer ersten Umwandlungsvorschrift in ein erstes niedrig aufgelöstes Bild A gewandelt. Die Wandlung des Sollbildes S in das erste niedrig aufgelöste Bild A wurde bereits anhand der Fig. 3 beschrieben, deshalb wird hier nicht weiter darauf eingegangen.

Weiters wird im selben Folgeschritt b) das gemäß Schritt a) empfangene Sollbild S gemäß einer zweiten Umwandlungsvorschrift in ein zweites niedrig aufgelöstes Bild B gewandelt. Das zweite niedrig aufgelöste Bild B ist dergestalt gewählt, so dass es die native Auflösung des Leuchtmoduls 1 aufweist. Weiters ist das zweite niedrig aufgelöste Bild B dergestalt gewählt, dass es für sich genommen einen ähnlicheren Bildeindruck zu dem Sollbild S aufweist als das erste niedrig aufgelöste Bild A.

Die zweite Umwandlungsvorschrift kann von der Modulsteuereinheit 2 ausgeführt werden. Demnach kann die Modulsteuereinheit 2 dazu eingerichtet sein die zweite Umwandlungsvorschrift auszuführen. Bevorzugt wird die zweite Umwandlungsvorschrift aber von der externen Recheneinheit 7 ausgeführt. Die externe Recheneinheit 7 kann also dazu eingerichtet sein die zweite Umwandlungsvorschrift auszuführen.

Die zweite Umwandlungsvorschrift umfasst bevorzugt eine Skalierungsmethode. Diese Skalierungsmethode beinhaltet bevorzugt die Reduktion der Auflösung des Sollbildes S auf die native Auflösung des Leuchtmoduls 1, wobei das resultierende zweite niedrig aufgelöste Bild B gänzlich aus den Informationen des Sollbildes S gebildet wird. Demnach kann es sich beispielsweise bei der Skalierungsmethode um eine bekannte "Downsampling" Methode handeln - welche beispielsweise jeden zweiten Sollichtintensitätswert des Sollbildes S verwirft, um sodann aus den verbleibenden Sollichtintensitätswerten die Lichtintensitätswerte des zweiten niedrig aufgelösten Bildes B zu bilden. Weiters ist es auch möglich, Blockverarbeitungsmethoden anzuwenden, bei denen Solllichtintensitätswerte des Sollbildes S blockweise zusammengefasst werden, um die einzelnen Lichtintensitätswerte des zweiten niedrig aufgelösten Bildes B zu bilden. Mit blockweisen zusammenfassen von Solllichtintensitätswerten sei gemeint, dass beispielsweise jeweils der Mittelwert von vier benachbarten Solllichtintensitätswerten - also einem 2 x 2 Block - gebildet wird, um sodann jeweils einen Lichtintensitätswert des zweiten niedrig aufgelösten Bildes B zu berechnen. Alternativ zur Mittelwertbildung können ebenso andere Methoden verwendet werden, beispielsweise die Medianwertbildung. Da dem Fachmann unterschiedlichste Skalierungsmethoden bekannt sind, wird nicht näher darauf eingegangen.

In einem weiteren Schritt b1) können das im vorangegangenen Schritt b) gewandelte erste niedrig aufgelöste Bild A und das gewandelte zweite niedrig aufgelöste Bild B abrufbar in einer Speichereinheit 6 abgespeichert werden. Die Modulsteuereinheit 2 kann zum Abrufen der in der Speichereinheit 6 abgespeicherten niedrig aufgelösten Bilder A, B eingerichtet sein.

Wird die zweite Umwandlungsvorschrift von der externen Recheneinheit 7 ausgeführt, so kann diese externe Recheneinheit 7 dazu eingerichtet sein, das zweite niedrig aufgelöste Bild B im weiteren Schritt b1) in der Speichereinheit 6 des Leuchtmoduls 1 abrufbar abzuspeichern.

Wenn das Sollbild S einen stetigen Hell-Dunkel Verlauf aufweist, insbesondere wenn das Sollbild S einen stetigen Hell-Dunkel Verlauf in Form eines Symbols (wird später beschrieben) aufweist, kann es vorteilhaft sein, das erste niedrig aufgelöste Bild A und das zweite niedrig aufgelöste Bild B bereits vor dem vorgesehenen Einsatz des Leuchtmoduls 1 zu wandeln. Besonders wenn eine hohe Rechenleistung notwendig ist, um die niedrig aufgelösten Bilder A, B aus dem Sollbild S zu wandeln, kann die Wandlung vor dem vorgesehenen Einsatz des Leuchtmoduls 1 sinnvoll sein. Auch in diesem Fall werden die vorab gewandelten niedrig aufgelösten Bilder A, B wie beschrieben abrufbar in einer Speichereinheit 6 abgespeichert. Der vorgesehene Einsatz des Leuchtmoduls 1 kann beispielsweise die bevorzugte Verwendung des Leuchtmoduls 1 in einer Kraftfahrzeugleuchte 10 umfassen.

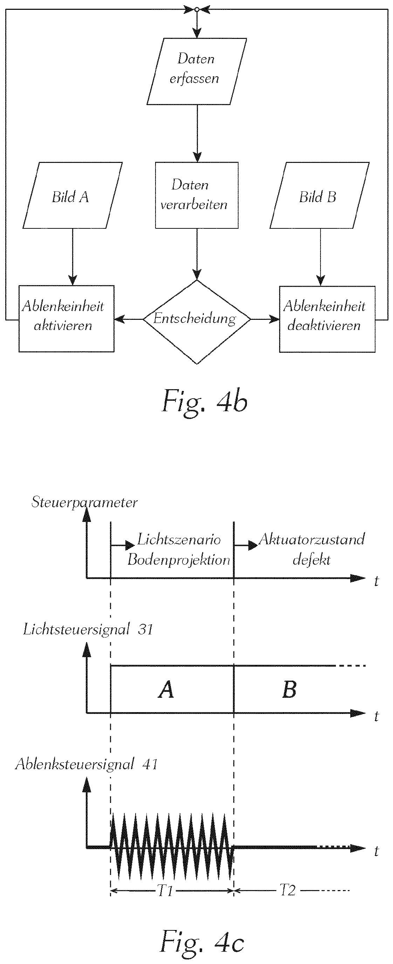

Fig. 4b zeigt ein drittes Flussdiagramm. Dieses dritte Flussdiagramm wird wechselweise mit Bezug zu Fig. 4c beschrieben. Fig. 4c zeigt ein Zeitdiagramm der weiteren Ausbildung des Verfahrens mit einem ersten Zeitbereich T1 und einem zweiten Zeitbereich T2. Weiters zeigt das Zeitdiagramm ein Lichtsteuersignal 31 und ein Ablenksteuersignal 41.

Das dritte Flussdiagramm bezieht sich auf ein Kraftfahrzeug 100 mit einem entsprechenden Leuchtmodul 1. Dabei werden fortlaufend Daten des Kraftfahrzeuges 100 verarbeitet. Die Modulsteuereinheit 2 kann dazu eingerichtet sein, entsprechende Steuerparameter mit den Daten des Kraftfahrzeuges 100 zu empfangen, zu verarbeiten und auf Grundlage dessen ein Lichtsteuersignal 31 und ein Ablenksteuersignal 41 abzugeben. Diese Daten des Kraftfahrzeuges 100 können Informationen zu zumindest einem der folgenden Kriterien umfassen:
- Solllichtfunktion
- Umgebungstemperatur
- Umgebungshelligkeit
- Leuchtmodulzustand
- Fahrzeuggeschwindigkeit

Das Kriterium Sollichtfunktion kann dabei eine Beschreibung des geforderten Lichtszenarios umfassen. Beispielsweise kann das geforderte Lichtszenario eine dynamische ADB Funktion (Adaptive Driving Beam) oder eine Bodenprojektion sein. Eine Bodenprojektion meint dabei beispielsweise das Vorliegen eines Sollbildes S mit mehreren stetigen Hell-Dunkel Verläufen C, welche zusammen ein Symbol formen. Das geforderte Lichtszenario ist aber nicht auf die genannten Beispiele beschränkt. Es ist auch möglich, dass das geforderte Lichtszenario eine Kombination aus einer dynamischen ADB Funktion und einer Bodenprojektion umfasst.

Die Umgebungstemperatur kann die Umgebungstemperatur des Kraftfahrzeuges 100, die Umgebungstemperatur der Kraftfahrzeugleuchte 10, die Umgebungstemperatur des Leuchtmoduls 1 und/oder bevorzugt die Umgebungstemperatur der Ablenkeinheit 4 umfassen. Die Umgebungstemperatur meint dabei beispielsweise die unmittelbare Temperatur des genannten Gegenstands.

Die Umgebungshelligkeit kann die Umgebungshelligkeit des Kraftfahrzeuges 100 umfassen.

Der Leuchtmodulzustand kann den Zustand einer oder mehrerer Komponenten des Leuchtmoduls 1 umfassen. Beispielsweise umfasst der Leuchtmodulzustand einen Aktuatorzustand oder einen Speichereinheitzustand. Der Aktuatorzustand kann den Zustand der Ablenkeinheit 4 beschreiben. Der Aktuatorzustand könnte beispielsweise den Zustand defekt oder nicht-defekt einnehmen. Ein defekter Aktuatorzustand könnte beispielsweise den Zustand einer Ablenkeinheit 4 beschreiben, welche keine ordnungsgemäße wiederkehrende Strahlablenkung ausführen kann. Der Speichereinheitzustand kann den Zustand der Speichereinheit 6 beschreiben.

Die Fahrzeuggeschwindigkeit kann die die Geschwindigkeit des Kraftfahrzeuges 100 umfassen.

Gemäß des dritten Flussdiagramms werden die Daten des Kraftfahrzeuges 100 entsprechend verarbeitet, um eine Entscheidungsgrundlage für das Aktivieren oder Deaktivieren der wiederkehrende Strahlablenkung durch die Ablenkeinheit 4, sowie für das Abstrahlen des ersten niedrig aufgelösten Bildes A oder des zweiten niedrig aufgelösten Bildes B zu erhalten.

Wird beispielsweise im Betrieb eine Bodenprojektion als Lichtszenario gefordert, so kann gemäß der weiteren Ausbildung des Verfahrens das zuvor abgespeicherte erste niedrig aufgelöste Bild A von der Modulsteuereinheit 2 abgerufen werden und ein entsprechendes Lichtsteuersignal 31 an die Lichtquelle 3 abgegeben werden. Weiters kann von der Modulsteuereinheit 2 ein entsprechendes Ablenksteuersignal 41 an die Ablenkeinheit 4 abgegeben werden, um die wiederkehrende Strahlablenkung durch die Ablenkeinheit 4 zu aktivieren.

Die Abgabe des Lichtsteuersignals 31 zur Abstrahlung des ersten niedrig aufgelösten Bildes A und/oder die Abgabe des Ablenksteuersignals 41 zur Aktivierung der wiederkehrenden Ablenkung durch die Ablenkeinheit 4 kann den ersten Zeitbereich T1 starten und gegebenenfalls den zweiten Zeitbereich T2 beenden - sofern dieser bereits davor gestartet wurde. Wesentlich ist, dass im ersten Zeitbereich T1 das erste niedrig aufgelöste Bild A durch das Leuchtmodul 1 abgestrahlt wird und dieses erste niedrig aufgelöste Bild A im ersten Zeitbereich T1 wiederkehrend mittels der Ablenkeinheit 4 abgelenkt wird.

Liegt beispielsweise ein defekter Aktuatorzustand vor, so kann gemäß der weiteren Ausbildung des Verfahrens das zuvor abgespeicherte zweite niedrig aufgelöste Bild B von der Modulsteuereinheit 2 abgerufen werden und ein entsprechendes Lichtsteuersignal 31 an die Lichtquelle 3 abgegeben werden. Weiters kann von der Modulsteuereinheit 2 ein entsprechendes Ablenksteuersignal 41 an die Ablenkeinheit 4 abgegeben werden, um eine gegebenenfalls bestehende wiederkehrende Strahlablenkung mittels der Ablenkeinheit 4 zu beenden.

Die Abgabe des Lichtsteuersignals 31 zur Abstrahlung des zweiten niedrig aufgelösten Bildes B und/oder die Abgabe des Ablenksteuersignals 41 zur Deaktivierung der Ablenkeinheit 4 kann den zweiten Zeitbereich T2 starten und gegebenenfalls den ersten Zeitbereich T1 beenden - sofern dieser bereits davor gestartet wurde. Wesentlich ist, dass im zweiten Zeitbereich T2 das zweite niedrig aufgelöste Bild B durch das Leuchtmodul 1 abgestrahlt wird und dieses zweite niedrig aufgelöste Bild B im zweiten Zeitbereich T2 nicht wiederkehrend mittels der Ablenkeinheit 4 abgelenkt wird.

Damit kann die Dauer und/oder der Startzeitpunkt des ersten Zeitbereichs T1 sowie die Dauer und/oder der Startzeitpunkt T2 des zweiten Zeitbereichs durch zumindest einen Steuerparameter bestimmt werden, wobei der zumindest eine Steuerparameter Informationen zu zumindest einem der oben genannten Kriterien enthält. Dies setzt natürlich voraus, dass das Leuchtmodul 1 selbst aktiviert ist. Eine deaktiviertes Leuchtmodul 1 bzw. eine deaktivierte Kraftfahrzeugleuchte 10 oder ein durch sonstige Einflüsse nicht aktiviertes Leuchtmodul 1 lässt das Bestehen derartiger Zeitbereiche T1, T2 nicht zu und wird hier nicht thematisiert, wenngleich klar ist, dass das aufgrund sonstiger Einflüsse zu deaktivierende Leuchtmodul 1 einen gegebenenfalls davor bestehenden ersten Zeitbereich T1 oder davor bestehenden zweiten Zeitbereich T2 zwingend beenden wird.

Der Start eines zweiten Zeitbereichs T2 ist nicht an das Bestehen eines vorangegangenen ersten Zeitbereichs T1 gebunden. Ebenso wenig ist der Start eines ersten Zeitbereiches T1 an das Bestehen eines vorangegangenen zweiten Zeitbereichs T2 gebunden. Es können auch mehrere erste Zeitbereiche T1 zeitlich hintereinander gestartet werden. Ebenso können mehrere zweite Zeitbereiche T2 zeitlich hintereinander gestartet werden. Es können auch mehrmals abwechselnd ein erster Zeitbereich T1 und ein zweiter Zeitbereich T2 hintereinander gestartet werden.

Die Umgebungstemperatur kann beispielsweise dergestalt verarbeitet werden, dass eine Umgebungstemperatur der Aktuatoreinheit 4 bis zu einem oberen Grenzwert zu einer Abstrahlung des ersten niedrig aufgelösten Bildes A mit wiederkehrender Strahlablenkung führt und dass eine Umgebungstemperatur der Aktuatoreinheit 4 ab dem oberen Grenzwert zu einer Abstrahlung des zweiten niedrig aufgelösten Bildes B ohne wiederkehrender Strahlablenkung führt. Der obere Grenzwert der Umgebungstemperatur der Aktuatoreinheit 4 kann dabei zwischen 40°C und 85°C liegen.

Die Umgebungshelligkeit kann beispielsweise dergestalt verarbeitet werden, dass eine Umgebungshelligkeit bis zu einem oberen Grenzwert zu einer Abstrahlung des ersten niedrig aufgelösten Bildes A mit wiederkehrender Strahlablenkung führt und dass eine Umgebungshelligkeit ab dem oberen Grenzwert zu einer Abstrahlung des zweiten niedrig aufgelösten Bildes B ohne wiederkehrender Strahlablenkung führt. Der obere Grenzwert der Umgebungshelligkeit kann dabei zwischen 1000 lux und 7000 lux liegen.

Die Fahrzeuggeschwindigkeit kann dergestalt verarbeitet werden, dass eine Fahrzeuggeschwindigkeit bis zu einem oberen Grenzwert zu einer Abstrahlung des ersten niedrig aufgelösten Bildes A mit wiederkehrender Strahlablenkung führt und dass eine Fahrzeuggeschwindigkeit ab dem oberen Grenzwert zu einer Abstrahlung des zweiten niedrig aufgelösten Bildes B ohne wiederkehrender Strahlablenkung führt. Der obere Grenzwert der Fahrzeuggeschwindigkeit kann dabei zwischen 2 und 30 km/h liegen.

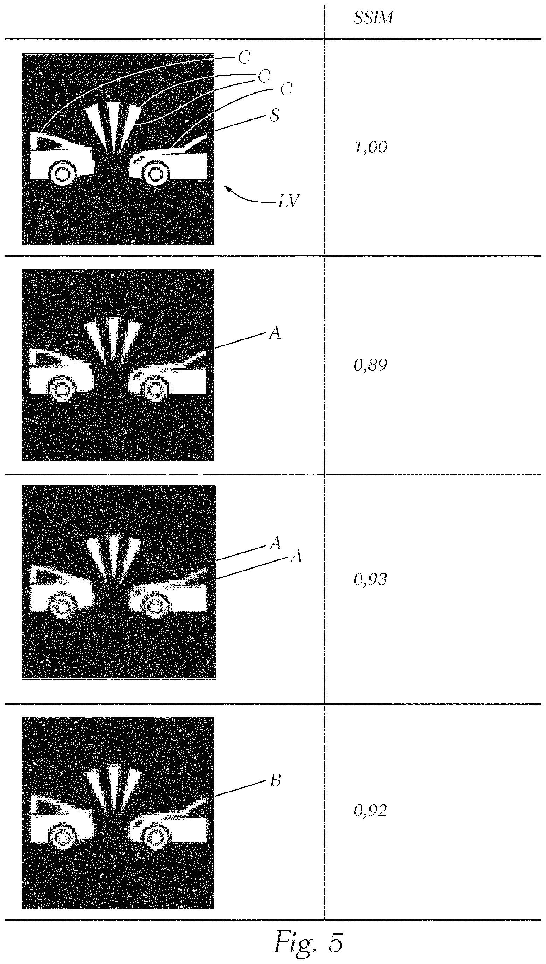

Fig. 5 zeigt einen Vergleich von einem beispielhaften Sollbild S, einem daraus gewandelten ersten niedrig aufgelösten Bild A, dem niedrig aufgelösten Bild A in der Überlagerung mit sich selbst und einem aus dem Sollbild S gewandelten zweiten niedrig aufgelösten Bild B.

Wenngleich in dieser Figurenbeschreibung teilweise dieselben Bezugszeichen wie in den vorangegangenen Figurenbeschreibungen verwendet werden, kann die Ausführung zum Teil unterschiedlich sein. Beispielsweise werden der einfacheren Darstellung halber andere Auflösungen gezeigt. Die hier beschriebenen Aspekte sind deshalb aber keineswegs von den bereits genannten Aspekten abzugrenzen, sondern zeigen vielmehr die vielseitige Anwendbarkeit der Erfindung, welche durch den gesamten Schutzumfang der Ansprüche definiert ist.

Das Sollbild S weist hier eine beispielhafte Soll-Lichtverteilung LV auf. Diese beispielhafte Soll-Lichtverteilung LV umfasst mehrere stetige Hell-Dunkel Verläufe C, welche zusammen ein Symbol formen. Die stetigen Hell-Dunkel Verläufe C sind lückenlose Trennlinien zwischen hellen Bereichen und dunklen Bereichen. Der Übergang zwischen einem hellen Bereich und einem dunklen Bereich kann auch fließend ausgestaltet sein. Das gezeigte Sollbild S in Form einer Soll-Lichtverteilung LV weist eine Auflösung auf, die die Auflösung des Leuchtmoduls 1 überschreitet. Konkret weist das in dieser Figur gezeigte Sollbild S eine Auflösung von 160 x 160 auf. Damit umfasst das gezeigte Sollbild S 160 x 160 Solllichtintensitätswerte.

Weiters ist ein gemäß dem Verfahren gewandeltes erstes niedrig aufgelöstes Bild A zu sehen. Dieses erste niedrig aufgelöste Bild A weist eine Auflösung von 80 x 80 auf. Die Auflösung von 80 x 80 würde im vorliegenden Fall der Auflösung des Leuchtmoduls 1 entsprechen. Damit umfasst das gezeigte niedrig aufgelöste Bild A 80 x 80 Lichtintensitätswerte.

Gemäß dem Verfahren wird dieses erste niedrig aufgelöste Bild A durch das Leuchtmodul 1 abgestrahlt und mittels der Ablenkeinheit 4 wiederkehrend abgelenkt. Die resultierende Überlagerung des ersten niedrig aufgelösten Bildes A mit sich selbst ist in dieser Figur im dritten Bild von oben zu sehen. Durch die wiederkehrende Strahlablenkung wird die durch das menschliche Auge wahrgenommene Auflösung gegenüber der nativen Auflösung von 80 x 80 erhöht. Das Ausmaß der Ablenkung entspricht im vorliegenden Fall im Wesentlichen einem vertikalen sowie einen horizontalen Versatz um eine halbe Segmentbreite.

Ein Vergleich des hier gezeigten und anhand der ersten Umwandlungsvorschrift gewandelten ersten niedrig aufgelösten Bildes A mit dem Sollbild S zeigt eine strukturelle Ähnlichkeit von 0,89. Hingegen zeigt ein Vergleich des Sollbildes S mit dem niedrig aufgelösten Bild A in der visuellen Überlagerung mit sich selbst eine strukturelle Ähnlichkeit von 0,93. Folglich ist der Bildeindruck des ersten niedrig aufgelösten Bildes A in der visuellen Überlagerung mit sich selbst ähnlicher zu dem Sollbild S, als die Abbildung des ersten niedrig aufgelösten Bildes A für sich genommen. Die Ähnlichkeit wird hier anhand der strukturellen Ähnlichkeit (SSIM - structural similarity index measure) beurteilt, womit teilweise eine Skalierung auf eine entsprechende Auflösung erforderlich ist. Jedoch sind auch anderen geeignete Algorithmen bekannt, um Bilder zu vergleichen.

Weiters ist ein gemäß der weiteren Ausbildung des Verfahrens gewandeltes zweites niedrig aufgelöstes Bild B zu sehen. Dieses zweite niedrig aufgelöste Bild B weist ebenso eine Auflösung von 80 x 80 auf.

Gemäß der weiteren Ausbildung des Verfahrens wird dieses zweite niedrig aufgelöste Bild B durch das Leuchtmodul 1 abgestrahlt und mittels der Ablenkeinheit 4 nicht wiederkehrend abgelenkt. Dadurch ergibt sich keine Überlagerung des zweiten niedrig aufgelösten Bildes B mit sich selbst. Ein Vergleich des hier gezeigten zweiten niedrig aufgelösten Bildes B mit dem Sollbild S zeigt eine strukturelle Ähnlichkeit von 0,92. Folglich weist das zweite niedrig aufgelöste Bild B für sich genommen einen ähnlicheren Bildeindruck zu dem Sollbild S auf als das erste niedrig aufgelöste Bild A.

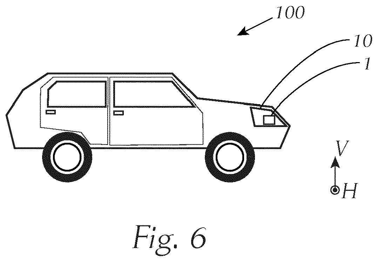

Fig. 6 zeigt nun abschließend ein Kraftfahrzeug 100 mit einem Leuchtmodul 1 für eine Kraftfahrzeugleuchte 10. Das Leuchtmodul 1 befindet sich hier in der vorgesehenen Einbauposition. Das Kraftfahrzeug 100 und/oder das Leuchtmodul 1 ist zur zumindest teilweisen Ansteuerung des vorliegenden Verfahrens eingerichtet. Das Kraftfahrzeug 100 kann dazu eingerichtet sein, einen ersten Teil des Verfahrens auszuführen, beispielsweise Schritt a) und Schritt b). Das Leuchtmodul 1 ist dazu eingerichtet zumindest gemäß Schritt c) des Verfahrens angesteuert zu werden. Das Kraftfahrzeug 100 und/oder das Leuchtmodul 1 kann auch dazu eingerichtet sein alle Schritte des Verfahrens auszuführen. Bevorzugt ist die externe Recheneinheit 7 dazu eingerichtet Schritt a) und Schritt b) des Verfahrens auszuführen, wobei die externe Recheneinheit kein Teil des Leuchtmoduls 1 ist.

Die Erfindung ist nicht auf die gezeigten Ausführungsformen und Ausbildungen des Verfahrens beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

### LISTE DER BEZUGSZEICHEN

- 1: Leuchtmodul
- 2: Modulsteuereinheit
- 3: Lichtquelle
- 4: Ablenkeinheit
- 5: Projektionseinheit
- 6: Speichereinheit
- 7: externe Recheneinheit
- 10: Kraftfahrzeugleuchte
- 30: Lichtbündel
- 31: Lichtsteuersignal
- 41: Ablenksteuersignal
- 42: Glasplättchen
- 50: Projektion
- 52: abgelenkte Projektion
- 100: Kraftfahrzeug
- A: erstes niedrig aufgelöstes Bild
- B: zweites niedrig aufgelöstes Bild
- C: Hell-Dunkel Verläufe
- LV: Soll-Lichtverteilung
- P: Projektionswinkelbereich
- S: Sollbild
- x: Schwenkachse

## Patentansprüche

1. Verfahren zur auflösungsoptimierten Ansteuerung eines Leuchtmoduls (1) für eine Kraftfahrzeugleuchte (10), wobei das Leuchtmodul (1) zur Abstrahlung einer segmentierten Lichtverteilung mit einzeln ansteuerbaren Lichtsegmenten (51) eingerichtet ist, wobei das Leuchtmodul (1) eine Ablenkeinheit (4) umfasst, mit der eine native Auflösung des Leuchtmoduls (1) durch zumindest zeitweise Strahlablenkung mittels der Ablenkeinheit (4) visuell erhöht werden kann, wobei das Verfahren die folgenden Schritte umfasst:
a) Empfangen eines Sollbildes (S), wobei das Sollbild (S) eine Auflösung aufweist, die die native Auflösung des Leuchtmoduls (1) überschreitet;
b) Umwandeln des gemäß Schritt a) empfangenen Sollbildes (S) in ein erstes niedrig aufgelöstes Bild (A) anhand einer ersten Umwandlungsvorschrift, wobei dieses erste niedrig aufgelöste Bild (A) dergestalt gewählt ist, dass dieses die native Auflösung des Leuchtmoduls (1) aufweist, wobei das erste niedrig aufgelöste Bild (A) zudem dergestalt gewählt ist, dass eine zumindest teilweise visuelle Überlagerung mit sich selbst einen zu dem Sollbild (S) ähnlicheren Bildeindruck ergibt, als die Abbildung des ersten niedrig aufgelösten Bildes (A) für sich genommen,
c) Ansteuerung des Leuchtmoduls, wobei die Ansteuerung dergestalt erfolgt, dass in einem ersten Zeitbereich (T1) das gemäß Schritt b) gewandelte erste niedrig aufgelöste Bild (A) durch das Leuchtmodul (1) abgestrahlt wird, wobei im ersten Zeitbereich (T1) das erste niedrig aufgelöste Bild (A) wiederkehrend mittels der Ablenkeinheit (4) derart abgelenkt wird, dass das erste niedrig aufgelöste Bild (A) im ersten Zeitbereich (T1) mit sich selbst zumindest teilweise visuell überlagert.

2. Verfahren nach Anspruch 1, wobei die Ablenkeinheit (4) dazu eingerichtet ist, das erste niedrig aufgelöste Bild (A) wiederkehrend im ersten Zeitbereich (T1) mit einer Frequenz von zumindest 30Hz, typischerweise zwischen 30Hz und 160Hz abzulenken.

3. Verfahren nach einem der vorhergehenden Ansprüche, wobei das Leuchtmodul (1) einzeln ansteuerbare Lichtsegmente (51) aufweist, wobei die Segmentierung der Lichtverteilung durch die einzeln ansteuerbaren Lichtsegmente (51) realisiert ist, die in einer Matrix mit einer Auflösung von zumindest zwei Zeilen und zwei Spalten weitgehend lückenlos nebeneinander angeordnet sind.

4. Verfahren nach Anspruch 3, wobei vorzugsweise vorgesehen ist, dass eine maximale durchgeführte Ablenkung durch die Ablenkeinheit (4) so konzipiert ist, dass im Vergleich zu einem nicht abgelenkten Referenzzustand der abgelenkte Zustand einen vertikalen sowie einen horizontalen Versatz um eine halbe Segmentbreite aufweist, sodass bei Vorliegen der maximalen Amplitude der Ablenkung - abgesehen von Randlichtsegmenten - jedes abgelenkte Lichtsegmente (51) im Wesentlichen mit vier nichtabgelenkten Lichtsegmenten (51) visuell überlagert.

5. Verfahren nach einem der vorhergehenden Ansprüche, wobei die erste Umwandlungsvorschrift eine zumindest näherungsweise Lösung eines linearen Gleichungssystems umfasst, welches lineare Gleichungssystem eine Menge von linearen Gleichungen beinhaltet, in denen Informationen des Sollbildes (S) mit Bezug zum ersten niedrig aufgelösten Bild (A) in der zumindest teilweisen Überlagerung mit sich selbst enthalten sind.

6. Verfahren nach einem der vorhergehenden Ansprüche, wobei die erste Umwandlungsvorschrift von einer externen Recheneinheit (7) ausgeführt wird, wobei vorzugsweise das erste niedrig aufgelöste Bild (A) in einer Speichereinheit (6) des Leuchtmoduls (1) abrufbar abgespeichert wird.

7. Verfahren nach einem der vorhergehenden Ansprüche, wobei in Schritt b) das gemäß Schritt a) empfangene Sollbild (S) anhand einer zweiten Umwandlungsvorschrift zusätzlich in ein zweites niedrig aufgelöstes Bild (B) gewandelt wird, wobei das zweite niedrig aufgelöste Bild (B) dergestalt gewählt ist, dass dieses die native Auflösung des Leuchtmoduls (1) aufweist, wobei das zweite niedrig aufgelöste Bild (B) zudem dergestalt gewählt ist, dass es für sich genommen einen ähnlicheren Bildeindruck zu dem Sollbild (S) aufweist als das erste niedrig aufgelöste Bild (A), wobei in Schritt c) in einem zweiten Zeitbereich (T2) das zweite niedrig aufgelöste Bild (B) durch das Leuchtmodul (1) abgestrahlt wird, wobei im zweiten Zeitbereich (T2) das zweite niedrig aufgelöste Bild (B) nicht wiederkehrend mittels der Ablenkeinheit (4) abgelenkt ist.

8. Verfahren nach Anspruch 7, wobei die zweite Umwandlungsvorschrift eine Skalierungsmethode umfasst, bei der das zweite niedrig aufgelöste Bild (B) gänzlich aus Informationen des Sollbildes (S) gewandelt wird.

9. Verfahren nach Anspruch 7 oder 8, wobei die Dauer und/oder der Startzeitpunkt des ersten Zeitbereichs (T1) sowie die Dauer und/oder der Startzeitpunkt des zweiten Zeitbereichs (T2) durch zumindest einen Steuerparameter bestimmt wird, wobei der zumindest eine Steuerparameter Informationen zu zumindest einem der folgenden Kriterien enthält: Solllichtfunktion, Umgebungstemperatur, Umgebungshelligkeit, Leuchtmodulzustand, Fahrzeuggeschwindigkeit.

10. Verfahren nach einem der Ansprüche 7 bis 9, wobei die zweite Umwandlungsvorschrift von einer externen Recheneinheit (7) ausgeführt wird.

11. Verfahren nach einem der Ansprüche 7 bis 10, wobei das gemäß Schritt b) gewandelte erste niedrig aufgelöste Bild (A) und das gemäß Schritt b) gewandelte zweite niedrig aufgelöste Bild (B) zeitlich vor Schritt c) in einem Teilschritt b1) abrufbar in einer Speichereinheit (6) abgespeichert werden.

12. Verfahren nach einem der vorhergehenden Ansprüche, wobei das Sollbild (S) zumindest einen stetigen Hell-Dunkel Verlauf (C) aufweist, bevorzugt weist das Sollbild (S) mehrere stetige Hell-Dunkel Verläufe (C) auf, welche zusammen ein Symbol formen.

13. Leuchtmodul (1) für eine Kraftfahrzeugleuchte (10), wobei das Leuchtmodul (1) zur Abstrahlung einer segmentierten Lichtverteilung eingerichtet ist, wobei das Leuchtmodul (1) eine Ablenkeinheit (4) umfasst, mit der eine visuell wahrnehmbare Auflösung der vom Leuchtmodul (1) erzeugten Lichtverteilung gegenüber der nativen Auflösung des Leuchtmoduls (1) erhöht werden kann, wobei das Leuchtmodul (1) dazu eingerichtet ist, zumindest gemäß Schritt c) des Verfahrens nach einem der vorhergehenden Ansprüche angesteuert zu werden.

14. Leuchtmodul (1) nach Anspruch 13, wobei das Leuchtmodul (1) weiters eine Speichereinheit (6) sowie eine Modulsteuereinheit (2) umfasst,
wobei die Speichereinheit (6) dazu eingerichtet ist, zumindest ein erstes niedrig aufgelöstes Bild (A) und zumindest ein zweites niedrig aufgelöstes Bild (B) zu speichern,
wobei die Modulsteuereinheit (2) dazu eingerichtet ist, das erste niedrig aufgelöste Bild (A) sowie das zweite niedrig aufgelöste Bild (B) von der Speichereinheit (6) abzurufen und ein Lichtsteuersignal (31) an die Lichtquelle (3) abzugeben, sodass entweder das erste niedrig aufgelöste Bild (A) oder das zweite niedrig aufgelöste Bild (B) von dem Leuchtmodul (1) abgestrahlt wird,
wobei die Modulsteuereinheit (2) weiters dazu eingerichtet ist, die Ablenkeinheit (4) derart anzusteuern, dass diese bei der Abstrahlung des ersten niedrig aufgelösten Bildes (A) durch das Leuchtmodul (1) das erste niedrig aufgelöste Bild (A) wiederkehrend ablenkt, wobei die Modulsteuereinheit (2) weiters dazu eingerichtet ist, die Ablenkeinheit (4) derart anzusteuern, dass diese bei der Abstrahlung des zweiten niedrig aufgelösten Bildes (B) durch das Leuchtmodul (1) das zweite niedrig aufgelöste Bild (B) nicht wiederkehrend ablenkt.

15. Kraftfahrzeug (100) mit einem Leuchtmodul (1) nach einem der Ansprüche 13 oder 14, wobei das Kraftfahrzeug (100) und/oder das Leuchtmodul (1) zur zumindest teilweisen Ausführung des Verfahrens nach einem der Ansprüche 1 bis 12 eingerichtet ist.
